# EUROPÄISCHE PATENTANMELDUNG

(11) **EP 2 500 671 A2**
(43) Veröffentlichungstag der Anmeldung: **19.09.2012**
(21) Anmeldenummer: 12405027.9
(22) Anmeldetag: 08.03.2012
(51) Int. Cl.: F24J 2/20, F24J 2/46

(54) **Vorrichtung zum Sammeln und/oder Austauschen von Wärmeenergie**

(30) Priorität: 16.03.2011 DE 102011014187
(71) Anmelder: Kollbrunner, Reto J., 6004 Luzern (CH)
(72) Erfinder: Kollbrunner, Reto J., 6004 Luzern (CH)
(74) Vertreter: Nückel, Thomas

(57) **Zusammenfassung**

Die Vorrichtung zum Sammeln und/oder Austauschen von Wärmeenergie umfasst ein Panel (1; 100; 110), das eine erste und eine zweite Abdeckplatte (5, 6) und dazwischen Stege (7) aufweist, welche mehrere nebeneinander verlaufende Kanäle (10 - 16) bilden. Die Kanäle (10 - 16) weisen jeweils einen Einlass und einen Auslass auf. Zudem sind ein erster Anschlusskanal (2), der mit den Einlässen verbunden ist, und ein zweiter Anschlusskanal (3) vorgesehen, der mit den Auslässen verbunden ist.

## Beschreibung

### Technisches Gebiet

Die Erfindung betrifft eine Vorrichtung zum Sammeln und/oder Austauschen von Wärmeenergie.

### Stand der Technik

Aus der Druckschrift US 4 205 662 ist ein Solarpanel bekannt, das eine Reihe von nebeneinander angeordneten Leitungen aufweist, durch die das zu erwärmende Wasser strömt. Auf der Oberseite sind die Leitungen mit einer Glasscheibe abgedeckt. Auf der Unterseite der Leitungen ist eine Tragstruktur angeordnet, die für eine ausreichende Stabilität des gesamten Solarpanels sorgt. Quer zur Längsrichtung der Leitungen ist am Ende der Leitungen eine Einlassleitung angeordnet. Die Einlassleitung ist über einen speziell ausgebildeten Flansch mit den nebeneinander angeordneten Leitungen verbunden. Das zu erwärmende Wasser wird über die Einlassleitung und den Flansch in die nebeneinander angeordneten Leitungen transportiert, dort durch die Sonnenstrahlung erwärmt und über einen weiteren Flansch und eine Auslassleitung wieder abtransportiert. Die Verbindung zwischen der Einlassleitung und den nebeneinander angeordneten Leitungen ist aufwändig herzustellen und benötigt einen speziellen Flansch.

Das Gleiche gilt sinngemäss auch für die Verbindung zwischen der Auslassleitung und den nebeneinander angeordneten Leitungen. Ist auch nur ein einziger Übergang von einem der vielen nebeneinander angeordneten Leitungen zu einem der Flansche undicht, ist das gesamte Solarpanel undicht.

### Darstellung der Erfindung

Eine Aufgabe der Erfindung ist es, eine Vorrichtung zum Sammeln und/oder Austauschen von Wärmeenergie anzugeben, die besonders einfach und kostengünstig aufgebaut ist.

Vorteilhafter Weise sind für die Herstellung der Vorrichtung zum Sammeln und/oder Austauschen von Wärmeenergie ausserordentlich wenige Komponenten erforderlich.

Ein weiterer Vorteil der Erfindung besteht darin, dass die Vorrichtung auch schnell und einfach wieder zerlegt und recycelt werden kann. Es werden wenige verschiedene Materialien verwendet, die problemlos wieder voneinander getrennt werden können.

Die erfindungsgemässe Vorrichtung kann industriell gefertigt werden.

Die Aufgabe wird durch eine Vorrichtung zum Sammeln und/oder Austauschen von Wärmeenergie mit den in Patentanspruch 1 angegebenen Merkmalen gelöst.

Die erfindungsgemässe Vorrichtung zum Sammeln und/oder Austauschen von Wärmeenergie umfasst ein Panel, das eine erste und eine zweite Abdeckplatte und dazwischen Stege aufweist, welche mehrere nebeneinander verlaufende Kanäle bilden. Die Kanäle weisen jeweils einen Einlass und einen Auslass auf. Zudem sind ein erster Anschlusskanal, der mit den Einlässen verbunden ist, und ein zweiter Anschlusskanal vorgesehen, der mit den Auslässen verbunden ist.

Vorteilhafte Weiterbildungen der Erfindung ergeben sich aus den in den abhängigen Patentansprüchen angegebenen Merkmalen.

Bei einer Ausführungsform der erfindungsgemässen Vorrichtung sind die Kanäle im Querschnitt rechteckig, trapezförmig oder dreieckig ausgebildet.

Bei einer zweiten Ausführungsform der erfindungsgemässen Vorrichtung sind die Stege mit der ersten und/oder der zweiten Abdeckplatte verklebt, verlötet oder verschweisst.

Bei einer weiteren Ausführungsform der erfindungsgemässen Vorrichtung sind die Stege durch eine zwischen den Abdeckplatten angeordnete gewellte Platte gebildet. Diese Ausführungsform ist besonders einfach und schnell herstellbar. Zudem ist diese Ausführungsform ausserordentlich stabil und besonders sicher gegen Leckage.

Bei einer Weiterbildung der erfindungsgemässen Vorrichtung ist eine der beiden Abdeckplatten aus Glas oder einem transparenten Kunststoff. Dadurch wird erreicht, dass das Sonnenlicht bis ins Innere der Kanäle gelangt.

Bei einer anderen Weiterbildung der erfindungsgemässen Vorrichtung ist eine der beiden Abdeckplatten mit Photovoltaikzellen ausgestattet. Auf diese Weise kann sowohl Strom gewonnen als auch die Wärmeenergie des Sonnenlichts ausgenutzt werden.

Bei der erfindungsgemässen Vorrichtung ist es von Vorteil, wenn die Stirnseite des Panels verschlossen ist.

Bei der erfindungsgemässen Vorrichtung können sich die Einlässe für die Kanäle in der ersten Abdeckplatte befinden. Dadurch wird auf besonders einfache Weise eine ausreichende Dichtigkeit sichergestellt.

Zudem kann vorgesehen sein, dass bei der erfindungsgemässen Vorrichtung weitere Einlässe für die Kanäle vorgesehen sind, die sich in der zweiten Abdeckplatte befinden. So können auf besonders einfache Weise unmittelbar benachbarte Kanäle mit einem einzigen Fluid, mit zwei verschiedenen Fluiden oder auch mit einem Fluid und einem Gas durchströmt werden. Gleichzeitig wird eine ausreichende Dichtigkeit sichergestellt.

Darüber hinaus können sich bei der erfindungsgemässen Vorrichtung die Auslässe für die Kanäle in der ersten Abdeckplatte befinden.

Es ist auch möglich, dass sich bei der erfindungsgemässen Vorrichtung weitere Auslässe für die Kanäle in der zweiten Abdeckplatte befinden.

Bei der erfindungsgemässen Vorrichtung kann ein Profil vorgesehen sein, in dem der Anschlusskanal angeordnet ist und das längsseitig einen Schlitz aufweist, um das Panel aufzunehmen. Das Panel und das Profil können dadurch einfach zusammengesteckt werden. Die Einlassöffnungen und der Anschlusskanal sind dann bereits richtig zueinander positioniert. Eine weitere Justierung ist nicht mehr erforderlich.

Zudem kann bei der erfindungsgemässen Vorrichtung vorgesehen sein, dass die Übergänge zwischen dem Schlitz und den Abdeckplatten des Panels abgedichtet sind.

Bei einer weiteren Ausführungsform der erfindungsgemässen Vorrichtung weist das Profil längsseitig eine Unterbrechung im Schlitz auf. Das Panel weist im Bereich der Unterbrechung eine entsprechende Ausnehmung auf.

Bei einer anderen Ausführungsform der erfindungsgemässen Vorrichtung ist das Profil mit dem Panel verklebt.

Darüber hinaus kann bei der erfindungsgemässen Vorrichtung vorgesehen sein, dass das Profil einen weiteren Anschlusskanal aufweist, wobei der erste Anschlusskanal mit einem Teil der Kanäle verbunden ist, und der weitere Anschlusskanal mit einem weiteren Teil der Kanäle verbunden ist.

Bei der erfindungsgemässen Vorrichtung kann das Profil aus Kunststoff, Metall oder Keramik sein. Als Metall kann beispielsweise Aluminium oder Kupfer verwendet werden.

Schliesslich kann die erfindungsgemässe Vorrichtung als Sonnenkollektor, Fassadenkollektor, Hybridkollektor, Wärmetauscher, Heizkörper oder Kühlelement verwendet werden.

### Kurze Beschreibung der Zeichnungen

- Figur 1: zeigt eine erste mögliche Ausführungsform der erfindungsgemässen Vorrichtung in der Draufsicht.
- Figur 2: zeigt einen Ausschnitt des Panels mit mehreren Kanälen in einer vergrösserten Ansicht im Querschnitt.
- Figur 3: zeigt das Anschlussprofil und einen Ausschnitt des Panels im Querschnitt.
- Figur 4: zeigt das Anschlussprofil und einen Ausschnitt des Panels in der Seitenansicht.
- Figur 5: zeigt einen Ausschnitt des Anschlussprofils und des Panels in der Draufsicht vor dem Zusammenbau.
- Figur 6: zeigt eine zweite mögliche Ausführungsform der erfindungsgemässen Vorrichtung in der Draufsicht.
- Figur 7: zeigt das Anschlussprofil und einen Ausschnitt des Panels der zweiten Ausführungsform im Querschnitt.
- Figur 8: zeigt eine dritte mögliche Ausführungsform der erfindungsgemässen Vorrichtung in der Draufsicht.
- Figur 9: zeigt eine vierte mögliche Ausführungsform der erfindungsgemässen Vorrichtung in der Draufsicht.

### Wege zur Ausführung der Erfindung

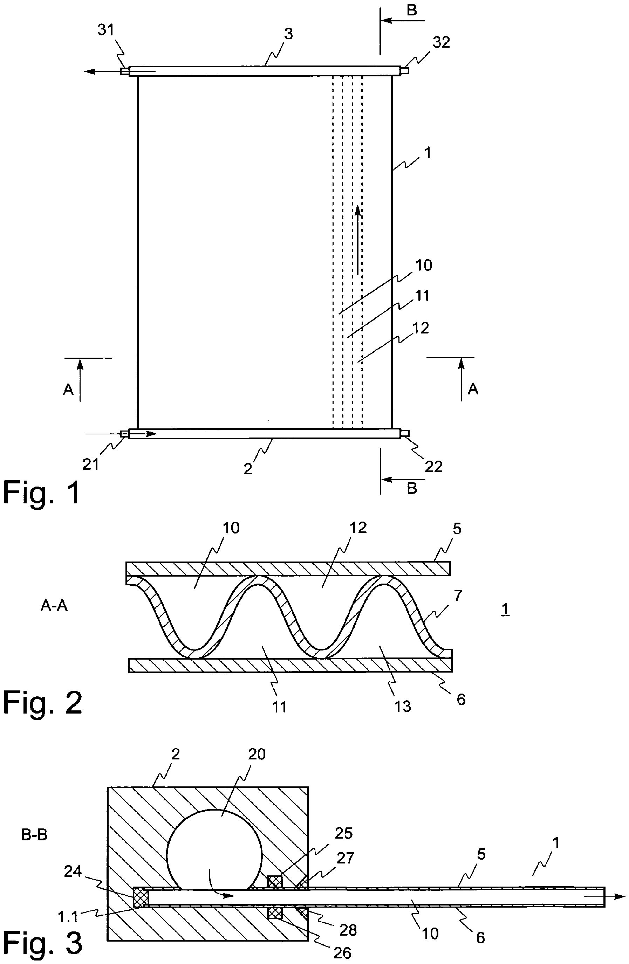

In Figur 1 ist eine erste Ausführungsform der erfindungsgemässen Vorrichtung zum Sammeln und/oder Austauschen von Wärmeenergie in der Draufsicht dargestellt. Die Vorrichtung umfasst ein Panel 1, in dem eine Reihe von Kanälen 10, 11, 12 angeordnet sind. In Figur 1 ist der Verlauf der Kanäle 10, 11 und 12 gestrichelt dargestellt. Das Panel 1 umfasst daneben noch weitere Kanäle, die auf die gleiche Weise wie die Kanäle 10, 11 und 12 angeordnet sind. Diese weiteren Kanäle sind jedoch der Übersichtlichkeit wegen nicht dargestellt. Die Anzahl der Kanäle hängt unter anderem von den baulichen Bedürfnissen ab und kann von Anwendungsfall zu Anwendungsfall variieren.

Figur 2 zeigt einen Ausschnitt des Panels 1 mit den Kanälen 10, 11, 12 und 13 in einer vergrösserten Ansicht im Querschnitt entlang der Schnittlinie A-A. Die Kanäle 10 bis 13 und auch die übrigen, nicht gezeigten Kanäle des Panels 1 werden durch eine erste Abdeckplatte 5, Stege 7 und eine untere Abdeckplatte 6 gebildet. So wird beispielsweise der Kanal 10 durch die erste Abdeckplatte 5 und zwei Stege 7, und der Kanal 11 durch die zweite Abdeckplatte 6 und ebenfalls zwei Stege 7 gebildet. Die Stege 7 trennen zum einen die verschiedenen Kanäle voneinander und bilden zum anderen eine Stütze zwischen den beiden Abdeckplatten 5 und 6, um die Formstabilität des Panels 1 zu erhöhen. Bei der in Figur 2 gezeigten Ausführungsform werden die Stege durch eine wellenförmig zwischen den beiden Abdeckplatten 5 und 6 verlaufende Platte 7 gebildet. Die Platte 7 muss aber nicht, wie in Figur 2 gezeigt, sinusförmig verlaufen. Statt dessen kann sie auch einen trapezförmigen oder rechteckigen Verlauf haben. Unter dem Begriff wellenförmig soll im Folgenden unter anderem sinusförmig, trapezförmig, dreieckförmig, rechteckig oder quadratisch verstanden werden. Die Kanäle mit den geraden Bezugsziffern (12, 14, 16 usw.) sind jene Kanäle, die durch die wellenförmige Platte 7 und die erste Abdeckplatte 5 gebildet werden. Die Kanäle mit den ungeraden Bezugsziffern (11, 13 usw.) sind jene Kanäle, die durch die wellenförmige Platte 7 und die zweite Abdeckplatte 6 gebildet werden.

Die erste Abdeckplatte 5 kann beispielsweise aus Aluminium, Glas oder einem Kunststoff hergestellt sein. Die zweite Abdeckplatte 6 kann ebenfalls aus Aluminium oder einem Kunststoff hergestellt sein. In der Regel ist es nicht erforderlich, die zweite Abdeckplatte 6 aus Glas herzustellen. Dies soll jedoch nicht ausgeschlossen sein.

An den beiden Stirnseiten des Panels 1 befindet sich jeweils ein Anschlussprofil 2 beziehungsweise ein Anschlussprofil 3. Als Stirnseiten werden jene schmalen Seiten des Panels 1 bezeichnet, an denen sich die Einlässe beziehungsweise Auslässe der Kanäle 10, 11, 12, usw. befinden. Das Anschlussprofil 2 bzw. 3 wird im Folgenden auch kurzum als Profil bezeichnet. Das Profil kann beispielsweise gespritzt, gegossen oder gefräst werden. Je nach Anwendungsfall kann das Profil 2 bzw. 3 aus Metall, Keramik oder Kunststoff gefertigt sein. Als Metall kann beispielsweise Kupfer oder Aluminium verwendet werden. Es sind aber auch andere Materialien einsetzbar, welche die Anforderungen, wie einfache Verarbeitbarkeit, geringe Umweltbelastung und hohe Nachhaltigkeit, erfüllen.

Bei der in Figur 1 dargestellten Ausführungsform wird ein Fluid, beispielsweise Wasser oder ein Kühlmittel, über einen im Anschlussprofil 2 befindlichen Anschlusskanal 20 in die Kanäle 10, 11, 12, usw. des Panels 1 transportiert. Figur 3 zeigt das Anschlussprofil 2 und einen Ausschnitt des Panels 1 im Querschnitt. Bei der Montage wird das Panel 1 in das Anschlussprofil 2 gesteckt. Im zusammengebauten Zustand steckt die Stirnseite 1.1 im Profil 2. Um die Kanäle 10, 11, 12, usw. des Panels 1 nach aussen abzudichten, sind im Anschlussprofil 2 mehrere Dichtungen 24, 25, 26, 27 und 28 vorgesehen. Je nach Anwendungsfall können jedoch eine oder zwei der Dichtungen 24, 25, 26, 27 und 28 genügen. Das heisst, dass nicht in jedem Fall alle der Dichtungen 24, 25, 26, 27 und 28 erforderlich sind. So kann es beispielsweise sein, dass es genügt, die stirnseitige Dichtung 24 und die mittlere Dichtung 25 vorzusehen. Anstelle der mittleren Dichtung 25 kann es auch von Vorteil sein, die vordere Dichtung 27 zu verwenden. Als Dichtmaterial kann beispielsweise Silikon eingesetzt werden.

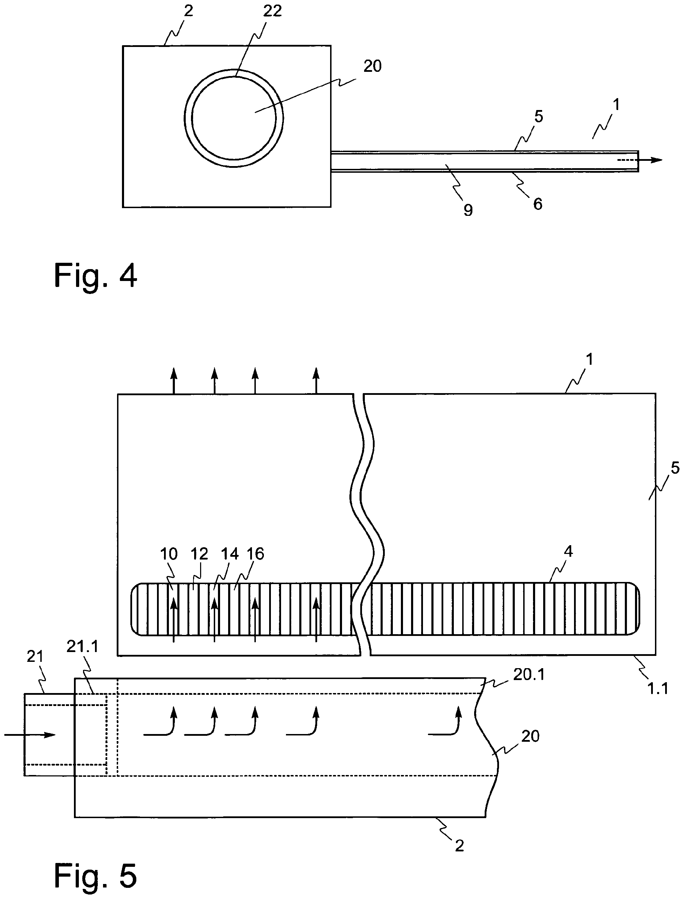

Die Ausführungsform gemäss Figur 1 ist modulartig gestaltet. Über entsprechend ausgestaltete Anschlussmuffen 21, 22, 31 und 32, welche sich an den längsseitigen Enden des Anschlussprofils 2 beziehungsweise des Anschlussprofils 3 befinden, können beliebig viele dieser Module miteinander gekoppelt werden. Figur 4 zeigt das Anschlussprofil 2 mit der Anschlussmuffe 22 und einen Ausschnitt des Panels 1 in der Seitenansicht. Das Panel 1 ist seitlich jeweils mit eine Abschlussleiste 9 versehen.

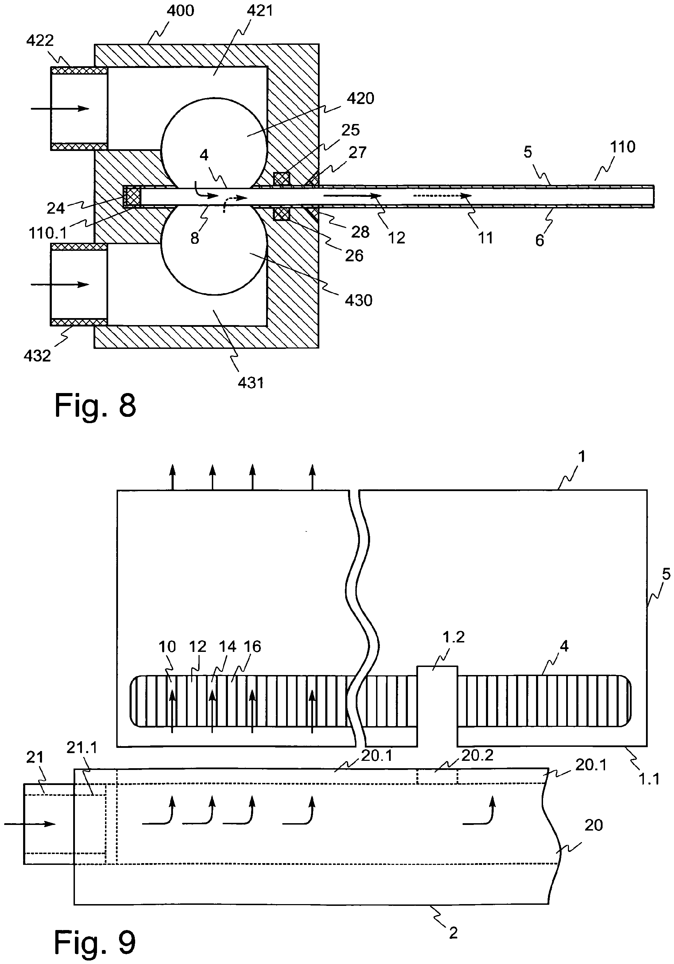

In Figur 5 ist ein Ausschnitt des Anschlussprofils 2 und des Panels 1 in der Draufsicht vor dem Zusammenbau dargestellt. Die erste Abdeckplatte 5 des Panels 1 weist eine Einlassöffnung 4 auf, um das Fluid in die Kanäle 10, 12, 14, 16, usw. leiten zu können. Die Einlassöffnung 4 ist dabei so angeordnet, dass sie im Anschlusskanal 20 des Anschlussprofils 2 zu liegen kommt, wenn das Panel 1 und das Anschlussprofil 2 zusammengefügt sind. Die Kanäle 11, 13, 15, usw. sind nicht mit der Einlassöffnung 4 verbunden. Falls die Kanäle 11, 13, 15, usw. ebenfalls mit einem Fluid versorgen werden sollen, kann die zweite Abdeckplatte 6 ebenfalls eine Einlassöffnung 8 (siehe andeutungsweise in Figur 8) aufweisen. In der Regel werden die Einlassöffnungen 4 und 8 werkseitig im Panel 1 vorgesehen. Die Einlassöffnungen 4 und 8 können beispielsweise durch einen Fräsvorgang erzeugt werden, indem die Abdeckplatte 5 bzw. 6 im gewünschten Bereich abgefräst wird. Die Einlassöffnungen 4 und 8 können aber auch mit einem Laser aus der Abdeckplatte 5 bzw. 6 herausgeschnitten werden. Bei Bedarf können die Einlassöffnungen 4 und 8 auch im Nachhinein noch im Panel 1 erzeugt werden. Dazu kann man beispielsweise Löcher in die Abdeckplatte 5 bzw. 6 bohren.

Der Anschlusskanal 20 im Anschlussprofil 2 ist in Figur 5 gestrichelt gezeichnet. In Längsrichtung weist das Anschlussprofil 2 einen Schlitz 20.1 auf, in den das Panel 1 bei der Montage hineingesteckt wird. Die Anschlussmuffe 21 kann beispielsweise über eine Schraubverbindung 21.1 mit dem Anschlussprofil 2 verbunden sein.

Im Betrieb strömt das Fluid in Pfeilrichtung in den Anschlusskanal 20 des Anschlussprofils 2 und von dort durch die Einlassöffnung 4 in die Kanäle 10, 12, 14, usw. Das Fluid strömt anschliessend durch die Kanäle 10, 12, 14, usw. in Richtung des Anschlussprofils 3 und tritt an einer entsprechenden Auslassöffnung in der ersten Abdeckplatte 5 wieder aus dem Panel 1 aus (in den Figuren nicht gezeigt). Danach strömt es durch den Anschlusskanal des Anschlussprofils 3 in Pfeilrichtung aus dem Anschlussprofil 3 heraus (siehe Figur 1).

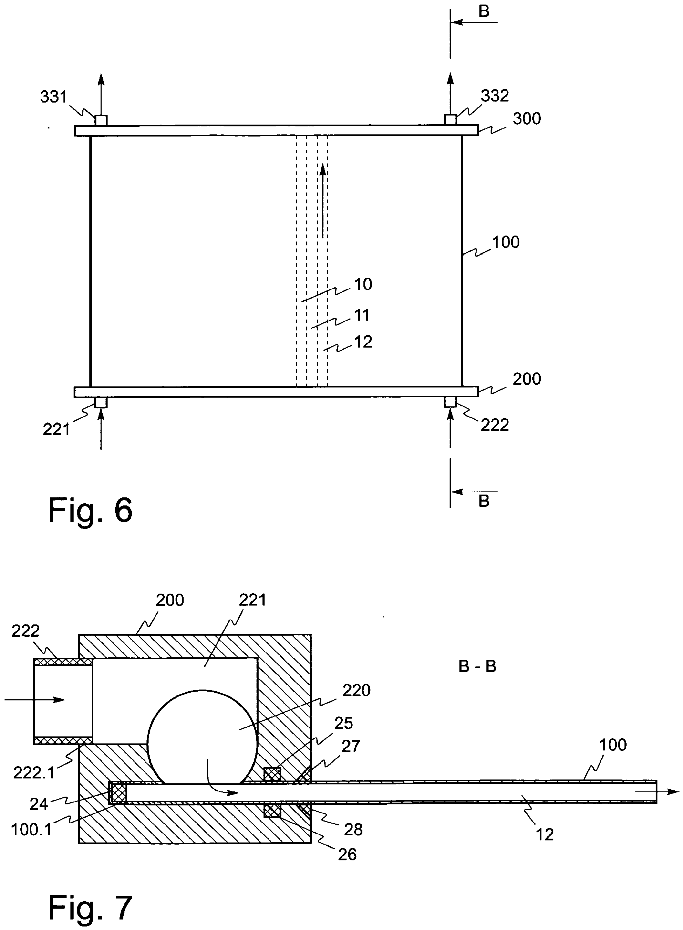

Figur 6 zeigt eine zweite mögliche Ausführungsform der erfindungsgemässen Vorrichtung in der Draufsicht. Während bei der ersten Ausführungsform die Anschlussmuffen 21, 22, 31 und 32 axial an den längsseitigen Enden der Anschlussprofile 2 und 3 angeordnet sind, sind bei der zweiten Ausführungsform die Anschlussmuffen 221, 222, 331 und 332 quer zu den Längsachsen der Anschlussprofile 200 und 300 angeordnet. Auch die weite Ausführungsform ist modulartig gestaltet. Über die Anschlussmuffen 221, 222, 331 und 332 können beliebig viele dieser Module miteinander gekoppelt werden. Das Fluid strömt bei der zweiten Ausführungsform über die beiden Anschlussmuffen 221 und 222 in das Profil 200 und von dort in das Panel 100. Über die beiden Anschlussmuffen 331 und 332 strömt das Fluid aus dem Profil 300 heraus und bei Bedarf dann in das nächste Modul hinein.

Figur 7 zeigt das Anschlussprofil 200 und einen Ausschnitt des Panels 100 der zweiten Ausführungsform im Querschnitt entlang der Schnittlinie B-B. Die Anschlussmuffe 222 ist beispielsweise über ein Schraubgewinde 222.1 mit dem Anschlussprofil 200 verbunden. Das Fluid gelangt durch die Anschlussmuffe 222 und einen quer zum Anschlusskanal 220 verlaufenden Kanal 221 in den Anschlusskanal 220 und von dort in das Panel 100. Der Schnitt ist in Figur 7 so gewählt, dass man anhand der Pfeile erkennen kann wie das Fluid in den Kanal 12 des Panels 100 strömt. Sinngemäss das Gleiche gilt für die übrigen Kanäle 12, 14, 16 usw.

Figur 8 zeigt eine dritte mögliche Ausführungsform der erfindungsgemässen Vorrichtung in der Draufsicht. Das Profil 400 weist ebenso wie die in Figur 7 gezeigte Ausführungsform einen Anschlusskanal 420, einen quer dazu verlaufenden Kanal 421 und eine Anschlussmuffe 422 auf. Über den Anschlusskanal 420 werden die Kanäle 10, 12, 14 16, usw. mit dem Fluid versorgt. Zusätzlich weist die dritte Ausführungsform einen weiteren Anschlusskanal 430, einen quer dazu verlaufenden Kanal 431 und eine Anschlussmuffe 432 auf. Über den weiteren Anschlusskanal 430 werden die Kanäle 11, 13, 15, usw. mit Fluid versorgt. Das Panel 1 weist dazu eine entsprechende Einlassöffnung 8 in der zweiten Abdeckplatte 6 auf. Bei der dritten Ausführungsform können die Kanäle 10, 12, 14, 16, usw. über den Anschlusskanal 420 mit einem ersten Fluid und die Kanäle 11, 13, 15, usw. mit einem zweiten Fluid über den Anschlusskanal 430 versorgt werden. Es ist aber auch möglich sämtliche Kanäle 10, 11, 12, 13, usw. mit einem einzigen Fluid zu versorgen.

Figur 9 zeigt eine vierte mögliche Ausführungsform der erfindungsgemässen Vorrichtung in der Draufsicht, wobei das Panel 1 und das Profil 2 noch nicht zusammengefügt sind. Der Schlitz 20.1 im Anschlussprofil 2 ist nicht durchgehend. Statt dessen ist eine Unterbrechung 20.2 vorgesehen, so dass der Schlitz 20.1 in zwei Abschnitte aufgeteilt wird. Die Unterbrechung 20.2 kann beispielsweise ein Steg oder eine Rippe sein. An dieser Stelle ist über die Rippe der obere Teil des Profils 2 mit dem unteren Teil des Profils 2 verbunden. Damit das Panel 1 in den Schlitz 20.1 geschoben werden kann, weist das Panel 1 an der Stelle, die später gegenüber der Rippe 20.2 angeordnet ist, eine entsprechend dimensionierte Ausnehmung 1.2 auf. Die Aufteilung des Schlitzes 20.1 in mehrere Abschnitte hat den Vorteil, dass das Profil 2 bei unveränderten Abmessungen insgesamt formstabiler ist. Die als Stege oder Rippen ausgebildeten Unterbrechungen 20.2 sorgen dafür, dass der obere Teil des Profils mit dem unteren Teil des Profils im Bereich der Rippen in Verbindung steht und so eine höhere Formstabilität erreicht wird. Die Anzahl der Rippen 20.2 hängt unter anderem von dem für das Profil 2 verwendeten Material, der Länge sowie der Wandstärke des Profils 2 ab.

Die Ausführung gemäss Figur 9 ist im Gleichstrom oder Gegenstrom betreibbar. Wird die Vorrichtung im Gleichstrom betrieben, strömen die beiden Fluide in der gleichen Richtung durch die Kanäle 10, 11, 12, 13, usw. Wird die Vorrichtung hingegen im Gegenstrom betrieben, strömt das eine Fluid in einer Richtung durch die Kanäle 10, 12, 14, usw. während das andere Fluid in entgegengesetzter Richtung durch die Kanäle 11, 13, 15, usw. strömt.

Die oben beschriebenen Ausführungsformen der Vorrichtung können als Sonnenkollektor, Fassadenkollektor, Hybridkollektor, Wärmetauscher, Heizkörper oder Kühlelement verwendet werden.

Unter einem Wärmetauscher wird ein Apparat verstanden, mit dem Wärmeenergie von einem Medium an ein anderes übertragen werden kann. Die Medien können dabei flüssig oder gasförmig sein. Der Wärmetauscher wird auch als Wärmeübertrager oder Wärmeaustauscher bezeichnet. Er überträgt also thermische Energie von einem Stoffstrom auf einen anderen.

Unter einem Sonnenkollektor oder auch thermischen Solarkollektor wird eine Vorrichtung zum Sammeln der im Sonnenlicht enthaltenen Energie verstanden. Der Solarkollektor heizt mit der absorbierten Sonnenenergie ein Übertragungsmedium, zum Beispiel Wasser auf.

Unter einem Hybridkollektor wird eine Kombination aus Sonnenkollektor und Photovoltaikanlage verstanden. Eine Photovoltaikanlage ist eine Vorrichtung, um aus Sonnenlicht elektrischer Energie zu gewinnen. Sie wird auch als Solarmodul bezeichnet.

Die vorhergehende Beschreibung der Ausführungsbeispiele gemäss der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente zu verlassen. So sind beispielsweise die verschiedenen in den Figuren 1 bis 9 gezeigten Komponenten der Vorrichtung auch auf eine andere als in den Figuren gezeigte Weise miteinander kombinierbar.

### Bezugszeichenliste

- 1: Panel
- 1.1: Stirnseite des Panels
- 1.2: Aussparung
- 2: Anschlussprofil
- 3: Anschlussprofil
- 4: Einlassöffnung
- 5: erstes Blech
- 6: zweites Blech
- 7: Steg
- 8: Einlassöffnung
- 9: Abschlussleiste
- 10: Kanal
- 11: Kanal
- 12: Kanal
- 13: Kanal
- 14: Kanal
- 16: Kanal
- 20: Anschlusskanal
- 20.1: Schlitz
- 20.2: Unterbrechung im Schlitz
- 21: Verbindungsmuffe
- 21.1: Gewinde
- 22: Verbindungsmuffe
- 24: Dichtung
- 25: Dichtung
- 26: Dichtung
- 27: Dichtung
- 28: Dichtung
- 31: Verbindungsmuffe
- 32: Verbindungsmuffe
- 100: Panel
- 100.1: Stirnseite des Panels
- 110: Panel
- 110.1: Stirnseite des Panels
- 200: Anschlussprofil
- 221: Anschlussmuffe
- 222: Anschlussmuffe
- 222.1: Gewinde
- 300: Anschlussprofil
- 331: Anschlussmuffe
- 332: Anschlussmuffe
- 400: Anschlussprofil
- 420: Anschlusskanal
- 421: Anschlusskanal
- 422: Anschlussmuffe
- 430: Anschlusskanal
- 431: Anschlusskanal
- 432: Anschlussmuffe

## Patentansprüche

1. Vorrichtung zum Sammeln und/oder Austauschen von Wärmeenergie,
- bei der ein Panel (1; 100; 110) vorgesehen ist, das eine erste und eine zweite Abdeckplatte (5, 6) und dazwischen Stege (7) aufweist, welche mehrere nebeneinander verlaufende Kanäle (10 - 16) bilden,
- bei der die Kanäle (10 - 16) jeweils einen Einlass und einen Auslass aufweisen,
- bei der ein erster Anschlusskanal (2) vorgesehen ist, der mit den Einlässen verbunden ist, und
- bei der ein zweiter Anschlusskanal (3) vorgesehen ist, der mit den Auslässen verbunden ist.

2. Vorrichtung nach Patentanspruch 1,
bei der die Kanäle (10 - 16) im Querschnitt rechteckig, trapezförmig oder dreieckig sind.

3. Vorrichtung nach Patentanspruch 1 oder 2,
bei der die Stege (7) mit der ersten und/oder der zweiten Abdeckplatte (5, 6) verklebt, verlötet oder verschweisst sind.

4. Vorrichtung nach einem der Patentansprüche 1 bis 3,
bei der die Stege (7) durch eine zwischen den Abdeckplatten (5, 6) angeordnete gewellte Platte gebildet sind.

5. Vorrichtung nach einem der vorherigen Patentansprüche,
bei der eine der beiden Abdeckplatten (5, 6) aus Glas oder einem transparenten Kunststoff ist.

6. Vorrichtung nach einem der vorherigen Patentansprüche,
bei der eine der beiden Abdeckplatten (5, 6) mit Photovoltaikzellen ausgestattet ist.

7. Vorrichtung nach einem der vorherigen Patentansprüche,
bei der die Stirnseite (1.1) des Panels (1; 100; 110) verschlossen ist.

8. Vorrichtung nach einem der vorherigen Patentansprüche,
bei der sich die Einlässe (4) für die Kanäle (10, 12, 14, 16) in der ersten Abdeckplatte (5) befinden.

9. Vorrichtung nach einem der vorherigen Patentansprüche,
bei der sich weitere Einlässe (8) für die Kanäle (11, 13, 15) in der zweiten Abdeckplatte (6) befinden.

10. Vorrichtung nach einem der vorherigen Patentansprüche,
bei der sich die Auslässe für die Kanäle (10, 12, 14, 16) in der ersten Abdeckplatte (5) befinden.

11. Vorrichtung nach einem der vorherigen Patentansprüche,
bei der sich weitere Auslässe für die Kanäle (11, 13) in der zweiten Abdeckplatte (6) befinden.

12. Vorrichtung nach einem der vorherigen Patentansprüche,
bei der ein Profil (2; 3; 200; 300; 400) vorgesehen ist, in dem der Anschlusskanal (20) angeordnet ist, und das längsseitig einen Schlitz (20.1) aufweist, um das Panel (1) aufzunehmen.

13. Vorrichtung nach einem der Patentanspruch 12,
bei der die Übergänge zwischen dem Schlitz (20.1) und den Abdeckplatten (5, 6) abgedichtet sind.

14. Vorrichtung nach einem der Patentansprüche 12 oder 13,
- bei der das Profil (2; 3; 200; 300; 400) längsseitig eine Unterbrechung (20.2) im Schlitz (20.1) aufweist,
- bei der das Panel (1; 100; 110) im Bereich der Unterbrechung (20.2) eine Ausnehmung (1.2) aufweist.

15. Vorrichtung nach einem der vorherigen Patentansprüche,
bei der das Profil (2; 3; 200; 300; 400) mit dem Panel (1; 100; 110) verklebt ist.

16. Vorrichtung nach einem der Patentansprüche 12 bis 15,
- bei der das Profil (400) einen weiteren Anschlusskanal (430) aufweist,
- bei der der erste Anschlusskanal (420) mit einem Teil der Kanäle (10, 12, 14) verbunden ist,
- bei der der weitere Anschlusskanal (430) mit einem weiteren Teil der Kanäle (11, 13, 15) verbunden ist.

17. Vorrichtung nach einem der vorherigen Patentansprüche 12 - 16,
bei der das Profil (2; 3; 200; 300; 400) aus Kunststoff, Metall oder Keramik ist.

18. Verwendung der Vorrichtung nach einem der vorherigen Patentansprüche,
als Sonnenkollektor, Fassadenkollektor, Hybridkollektor, Wärmetauscher, Heizkörper oder Kühlelement.
